# EUROPEAN PATENT SPECIFICATION

(11) **EP 3 820 720 B1**
(45) Date of publication and mention of the grant of the patent: **02.08.2023**
(21) Application number: 19759736.2
(22) Date of filing: 26.06.2019
(51) Int. Cl.: B60C 11/03, B60C 11/16

(54) **STUDDED TYRE FOR VEHICLE WHEELS**
SPIKEREIFEN FÜR FAHRZEUGRÄDER
PNEU A CLOU POUR ROUES DE VEHICULE

(30) Priority: 13.07.2018 IT 201800007190
(43) Date of publication of application: 19.05.2021
(73) Proprietor: Pirelli Tyre S.p.A., 20126 Milano (IT)
(72) Inventor: CASAROTTO, Giovanni, 20126 Milano (IT); SPEZIARI, Diego Ettore, 20126 Milano (IT); BOLZONI, Roberto, 20126 Milano (IT); BELLUZZO, Damiano Leonardo, 20126 Milano (IT)
(74) Representative: Susanetto, Carlo
(86) International application number: PCT/IB2019/055389
(87) International publication number: WO 2020/012278

(56) References cited:
- WO-A1-2014/115052
- WO-A1-2014/118659
- JP-A- 2007 050 718

## Description

The present invention relates to a studded tyre for vehicle wheels.

A tyre generally comprises a carcass structure that is in the shape of a toroid about an axis of rotation and comprises at least one carcass ply having end flaps that engage in respective annular anchoring structures, said bead cores.

A belt structure is provided in the radially external position of the carcass structure and, in tyres for cars, the belt structure comprises at least two strips that are radially overlaid by rubber textile fabric provided with reinforcing cords, usually metal cords, arranged inside each strip in parallel with one another but crossed with the cords of the adjacent strip, preferably symmetrically with respect to the equatorial plane of the tyre.

Furthermore, the belt structure preferably also comprises a third layer of textile or metal cords in radial external position, at least at the ends of the above-mentioned belt strips, which cords are arranged circumferentially (at 0 degrees). In tubeless tyres, a radially internal layer is also provided, called a "liner", which is impermeable in order to ensure that said tyre is airtight.

A tread band is applied in radial external position with respect to belt structure, which band is made of elastomer material and on which there is defined a tread surface that is intended to make contact with the road surface.

In order to ensure adequate road holding when the road surface is wet, the tyres comprise a tread band provided with grooves of various shapes and geometries, which delimit tread band portions that are intended to make contact with the ground, called blocks.

The main function of the grooves is to allow the water present between the surface of the tyre and the road surface to escape when these come into contact with one another, thus preventing the hydrostatic pressure originating from the impact of the water against the advancing tyre from being able to cause the tyre to lift, even in part, from the road surface and preventing the vehicle from consequently losing control.

The overall configuration of the tread band defined by all the grooves and blocks represents the tread pattern.

Said tread band is typically formed by the continuous repeated sequence of the same basic module over the entire circumferential extension of the tread band.

In winter tyres, small notches called "sipes" are also made in the blocks of the tread band, which extend from the tread surface of the tyre towards the inside of the block. The function of the sipes is to offer further grip elements when driving on a surface covered in snow and trapping a certain amount of snow, thereby improving the grip with the road surface.

Furthermore, in winter tyres of this kind, studs are provided in the blocks of the tread band, which, thanks to a portion thereof that projects from the tread surface, improves grip of the tyre on icy road surfaces.

The use of these tyres, said studded tyres, is regulated by the individual national authorities and is generally permitted in countries in which roads may be subjected to snow and ice conditions for a relevant part of the year.

Examples of tyres according to the prior art are disclosed in JP 2007050718, WO 2014/115052 and WO 2014/118659, wherein this last document is showing a studded tyre having a block configuration of different pitch length in the circumferential direction of said tyre and providing an uneven stud distribution within the tread elements.

The Applicant has preliminarily observed that the road-holding performance, both during traction and turning, provided by a studded tyre on icy surfaces is significantly dependent on the number of studs provided in the footprint area.

In particular, the Applicant has verified that, for uniform and consistent performance on icy surfaces, it is desirable for there to be a substantially constant number of studs in the footprint area when the tyre is rolling on the road surface.

The Applicant has therefore felt the need to provide a studded tyre, in which the studs were arranged in the tread band in a manner that meets this requirement.

In a first approach to meet this requirement, the Applicant has developed a studded tyre in which the same number of studs was provided in each module of the tread pattern, and the behaviour of said studs was studied.

However, the Applicant has observed that the adoption of this feature was not always sufficient per se for obtaining the desired effect.

The Applicant has therefore identified the cause of the differences observed in the number of studs identified in the footprint area as the provision of modules in the tread pattern that have different circumferential dimensions.

This provision resulted in particular from the unavoidable need to maintain as low levels of noise as possible in the tyre.

In particular, the Applicant has proved that the above-mentioned differences are mostly evident when the module on which the tread pattern is based is formed by several elementary portions, or sub-modules, each of which has two or more circumferential dimensions that differ from one another.

In fact, in this case, the number of circumferential dimensions (or "pitches") that a module can have increases exponentially, and therefore the different dimensions between modules can be considerable and not insignificant.

Furthermore, the Applicant has observed that, in order to reduce the noise of the tyre as much as possible during rolling, the modules need to be arranged along the tread band according to substantially random sequences, which renders it possible for two or more modules having larger circumferential dimensions to follow one another, or, in contrast, for two or more modules having smaller circumferential dimensions to follow one another.

The Applicant has therefore perceived that, in order to obtain a studded tyre in which the studs were arranged in the tread band so as to provide a substantially constant number of studs in the footprint area, it was necessary to give due consideration to the type of modules that define the tread pattern and their arrangement along the circumferential extent.

Lastly, the Applicant has found that, by first of all arranging a predefined number of studs in each module of a tread pattern whose module was formed by a first and by a second elementary portion of tread band, each of which can have a greater circumferential dimension (long pitch) or a smaller circumferential dimension (short pitch), and then adding a limited number of studs to the sequences of successive modules formed by elementary portions having a long pitch and removing a limited number of studs from the sequences of successive modules formed by elementary portions having a short pitch, a tread pattern is obtained that has a substantially constant number of studs in the footprint area, thereby providing optimum performance of the studded tyre during traction and turning.

In particular, in a first aspect thereof, the invention relates to a tyre for vehicle wheels according to claim 1.

In a second aspect thereof, the present invention relates to a method for producing a studded tyre according to claim 13.

In a third aspect thereof, the present invention relates to a studded tyre according to claim 14.

On account of the above-mentioned features, a studded tyre is obtained in which the studs are distributed in the tread band so as to provide a substantially constant number of studs in the footprint area during the entire rolling motion of the tyre on the road surface.

In particular, these features make it possible to optimally adapt the arrangement of the studs in the tread band to match the sequence of modules, which sequence is more or less random, that can meet the requirements of reducing the noise of the tread more effectively, without the arrangement of the studs posing design constraints on the definition of the more effective sequence of modules.

The choice of whether to add one or two studs to the first module or to remove one or two studs from the second module is substantially dependent on the difference in length between the short pitch and the long pitch, a choice that a specialist in the field is able to easily make after having defined the configuration of the tread pattern and determined the number of studs to be arranged in the tread band, by directly considering the tread pattern obtained or by means of practical tests.

The studded tyres formed according to the first and the third aspect described above share the same inventive solution, thus obtaining the same advantageous effect, for tyres having tread patterns whose modules may or may not comprise sub-modules.

The term "equatorial plane" of the tyre is intended to mean a plane that is perpendicular to the axis of rotation of the tyre and divides the tyre into two equal parts.

The "circumferential" direction is intended to mean a direction that is generally oriented according to the direction of rotation of the tyre or, at most, slightly inclined (no more than approximately 5°) with respect to the direction of rotation of the tyre.

The "axial" direction is intended to mean a direction that is substantially parallel to the axis of rotation of the tyre, or, at most, slightly inclined (no more than approximately 5°) with respect to said axis of rotation of the tyre. The axial direction is generally perpendicular to the circumferential direction.

The term "effective width" referring to the tread band is intended to mean the width of the radially outermost portion of the tread band (from edge to edge), which is intended to make contact with the ground.

The "central region" of the tread band is intended to mean a tread band portion that extends circumferentially about an equatorial plane of said tyre for a width that is equal to at least 30% of the effective width of the tread band, preferably for a width of between 40% and 60% of said effective width.

The central region may or may not extend symmetrically with respect to the equatorial plane.

In particular, when circumferential or almost circumferential grooves are provided in the tread band, the central region can be delimited on one or both sides by one of said circumferential grooves.

The "shoulder regions" of the tread band are intended to mean the tread band portions that extend circumferentially on opposite sides of the central region in the axially external position of the tread band.

Each shoulder region preferably extends for a width that is equal to at least 10% of the effective width of the tread band.

The term "groove" is intended to mean a recess made in a tread band portion that has a width that is greater than or equal to 1.5 mm, and preferably has a depth of more than 3 mm.

A groove is said to be "circumferential" when it extends in a circumferential direction or, at most, is inclined with respect to the circumferential direction by an angle of less than 5°.

A groove is said to be "transverse" when it extends in a direction that is inclined with respect to the circumferential direction by an acute angle of more than at least 10°.

The term "sipe" is intended to mean a recess made in a tread band portion that has a width that is smaller than 1.5 mm, preferably smaller than or equal to 1 mm.

The width of the sipes and grooves is intended to be measured at a depth that is greater than or equal to 1 mm, preferably greater than or equal to 1.5 mm.

In the case in which the width of the groove or of the sipe varies along its longitudinal extent, the width is considered to be an average width, the value of which is the average of the various width values that are suitably weighed on the basis of the relative longitudinal extensions. For example, if a groove has a width of 5 mm for 80% of its longitudinal extension and a width of 3 mm for the remaining 20%, the average of the width to be taken into account will be equal to 5 x 0.8 + 3 x 0.2 = 4.6 mm.

Similarly, if the width of one groove, in particular of a transverse groove, varies along the tread band depending on the length of the pitch to which it belongs, the average value will be considered.

One end of one groove is defined as being "blind" when it is not open to another groove.

The inclination of a transverse groove with respect to a circumferential direction identified on the tread band is defined by the acute angle formed by the groove and the circumferential direction. As a specific case, a transverse groove that extends in parallel with the axis of the tyre will have an inclination of 90° with respect to the circumferential direction.

Two (or more) transverse grooves are inclined "in a concordant manner" when the profile of both grooves increases or decreases when considered on a Cartesian plane positioned on the tread band (tangentially thereto), in which the y-axis is parallel to the circumferential direction and the x-axis is parallel to the axis of the tyre.

Accordingly, two transverse grooves are inclined "in a discordant manner" when the profile thereof increases for one groove and decreases for the other groove, when considered in said Cartesian plane.

A groove has an inclination that "generally decreases" from a first region towards a second region when:
- for segments equal to at least 50% of the longitudinal extension of the groove between the first and the second region, the inclination of the groove decreases as it moves from the first region towards the second region, and
- for segments equal to at least 80% of the longitudinal extension of the groove between the first and the second region, the inclination of the groove does not increase as it moves from the first region towards the second region.

Two groove segments (or two grooves) are "substantially aligned" when their longitudinal axes are offset, at least at their respective ends that face one another, by an amount that is smaller than their width (for segments having different widths, the larger width is taken into consideration).

Two grooves are "successive" when they are arranged one after the other in the tread surface, taking into consideration the rotation of the tyre in any one of the two directions of rotation. In particular, two grooves of the same type are successive when no other grooves of the same type are provided therebetween. The "tread pattern" is intended to mean the overall configuration of the tread band as defined by all of the grooves and the blocks delimited by the grooves.

A "module" of the tread pattern is defined by the minimum tread band portion, a repeated sequence of which configuration is provided along the circumferential extent of the tread band in order to form said tread pattern.

A module extends between the axial ends of the tread band.

Furthermore, while maintaining an identical basic configuration, the modules can have a circumferential dimension (said "pitch") that differs slightly for each module, for example modules having two, three or four different pitches can be used on one tread band in various combinations.

A module may be formed by two or more elementary portions (or submodules), which extend between the two axial ends of the tread band and are arranged in the same sequence inside each module.

In this case, each elementary portion can have the same basic configuration in different modules but slightly different circumferential dimensions (that is "pitches"), such that each module can be formed by elementary portions having a different pitch.

For example, if a module is formed by two elementary portions, each of which can have two different circumferential dimensions (a "long pitch" and a "short pitch"), four types of modules will be possible - a first type in which both the elementary portions have a long pitch, a second type in which the first elementary portion has a long pitch and the second elementary portion has a short pitch, a third type in which the first elementary portion has a short pitch and the second elementary portion has a long pitch, and, lastly, a fourth type in which both elementary portions have a short pitch.

The modules having two elementary portions are also called "two-pitch modules", while the modules that do not comprise at least two elementary portions (or, in other words, modules that comprise just one submodule that coincides with the module) are also called "single-pitch modules".

The long pitch has a circumferential dimension that is at least 10% longer than the short pitch.

The "footprint area" is intended to mean the tread band portion that instantly comes into contact with the road surface during the revolution of the tyre. Under real-life conditions, the footprint area is dependent on various parameters, including the tyre pressure, the load it is subjected to, the road surface and the driving conditions, for which reference values may, however, be defined.

In at least one of the above-mentioned aspects, the present invention can comprise at least one of the additional preferred features specified below.

A number of studs is preferably provided in each first module that is equal to said predefined number increased by one.

The Applicant has verified that, for differences in length between the long pitch and the short pitch such as those most commonly used in tyres, it is sufficient and correct to increase the number of studs in the first modules by just one with respect to the predefined number of studs.

In a preferred embodiment, said tread pattern is formed by 32 of said modules, and a number of studs is provided in each pair of adjacent second modules that is equal to double said predefined number decreased by one.

In a preferred embodiment, said tread pattern is formed by 33 of said modules and pairs of adjacent second modules, in which there is a number of studs that is equal to double said predefined number decreased by one, and pairs of adjacent second modules, in which there is a number of studs that is equal to double said predefined number decreased by two, are provided.

In this embodiment, the ratio between the first pairs and the second pairs is preferably approximately 3:2.

In another preferred embodiment, said tread pattern is formed by 34 of said modules and pairs of adjacent second modules, in which there is a number of studs that is equal to double said predefined number decreased by one, and pairs of adjacent second modules, in which there is a number of studs that is equal to double said predefined number decreased by two, are provided.

In this embodiment, the ratio between the first pairs and the second pairs is preferably approximately 1:2.

In another preferred embodiment, said tread pattern is formed by more than 34 modules and a number of studs that is equal to double said predefined number decreased by two is provided in each pair of adjacent second modules.

The Applicant has proven that, for differences in length between the long pitch and the short pitch such as those mostly used in tyres, it is advantageous to decrease the number of studs in the pairs of adjacent second modules by one or two with respect to double the predefined number of studs, depending on the number of modules present on the tread band, which is in turn linked to the diameter of the tyre.

Furthermore, the Applicant has observed that the above-mentioned provisions of adding or decreasing studs in the first or second modules are especially suitable when the long pitch is less than 150% of the size of the short pitch, more preferably is more than 115% of the short pitch and most preferably is approximately 130%.

The fraction of said modules in which a number of studs is provided that is equal to said predefined number is preferably greater than 30%, more preferably greater than 45%, and even more preferably greater than 60%.

In fact, it has been found that, compatibly with a sequence of modules having a specific distribution of short pitches and long pitches, the greater is the percentage of said first modules and the greater is the uniformity of the studs in the footprint area, both in an axial direction and in a circumferential direction.

Said predefined number of studs is preferably a number between 4 and 8.

Said predefined number is preferably an even number.

Said predefined number of studs is preferably 6.

Said predefined number is preferably given by the integer closest to the ratio between the total number of studs to be provided in the tread band and the total number of modules that form said band.

Said predefined number is preferably at most equal to the number of blocks of said module present in said shoulder regions.

In addition to said pairs of adjacent second modules, at least one additional second module is preferably provided, which is not adjacent to other second modules and in which a number of studs is provided that is equal to said predefined number decreased by one or two.

Said additional second module is preferably adjacent to a module that has just one first or one second elementary portion that has a short pitch and is adjacent to said additional second module.

In this way, if necessary, it is possible to decrease the overall number of studs provided in a tread band region formed by at least three consecutive elementary portions having a short pitch, that is where a relatively greater concentration of studs is detected, without necessarily having to provide two adjacent second modules.

The need to reduce the number of studs can, for example, be dictated by the need to observe a limit imposed by the regulations on the maximum number of studs, or by a design limit.

In another preferred embodiment, in addition to said first modules, an additional module is provided which is formed by a first or by a second elementary portion that has a long pitch and is adjacent to an elementary portion having a long pitch of another module, in which additional module a number of studs is provided that is equal to said predefined number increased by one or two.

In this way, if necessary, it is possible to increase the overall number of studs provided in a tread band region formed by two consecutive elementary portions that have a long pitch, without necessarily having to provide a first module.

Each module is preferably divided by an equatorial plane of said tyre into a first region and into a second region, which extend on opposite sides of said equatorial plane and, in each module in which an even number of studs is provided, said studs are equally distributed between said first region and said second region.

In this way, it is possible to arrange a homogeneous number of studs in the two tread band regions, thereby obtaining greater uniformity of the performance of the studded tyre in terms of traction and turning, in particular on icy surfaces.

In each module in which an even number of studs is provided, at least the studs closest to the equatorial plane and respectively located in said first and second regions are preferably positioned at different distances from said equatorial plane. Even more preferably, in each module in which an even number of studs is provided, all the studs are positioned at different distances from said equatorial plane.

On account of this feature, by always maintaining high performance of the tyre in terms of noise emissions and uniformity of the studs in the footprint area, wear of the road surface caused by the action of the studs when the studded tyre is used on a road surface that is only partially covered in ice or when there is no ice, is minimised. In this way, the regulations that provide an upper limit in respect of the amount of asphalt removed by the studs during rolling on a road surface that is only partially covered in ice or when there is no ice are met.

Said studs are preferably positioned at different distances from said equatorial plane in at least 90% of all of said modules.

On account of this arrangement, the reduction of the noise of the tyre is improved, and that advantageously makes it possible to arrange a greater number of studs in the tread band, without this making the overall noise caused by the tyre significantly worse.

Each module is preferably divided by an equatorial plane of said tyre into a first region and into a second region, which extend on opposite sides of said equatorial plane, and in each module in which a number of studs is provided that is increased by one with respect to said predefined number, the additional stud is always arranged in said first region or always in said second region.

Each module is preferably divided by an equatorial plane of said tyre into a first region and into a second region, which extend on opposite sides of said equatorial plane, and in each module in which a number of studs is provided that is decreased by one with respect to said predefined number, each absent stud is always removed from said first region or always from said second region.

Said first or second region, in which said additional stud is provided in said modules in which a number of studs is provided that is increased by one with respect to said predefined number, is preferably the same region from which said absent stud is removed in said modules in which a number of studs is provided that is decreased by one with respect to said predefined number.

In this way, all the changes to the number of studs are made in the same tread band region such that said region is numerically balanced. Furthermore, the other tread band region remains numerically homogeneous along the inner circumferential extent.

Said modules in which a number of studs is provided that is increased by one with respect to said predefined number preferably represent between 5% and 20% of the total number of modules that form said tread pattern.

More preferably, they represent between 10% and 15% of the total number of modules that form said tread pattern.

Said modules in which a number of studs is provided that is decreased by one with respect to said predefined number preferably represent between 10% and 25% of the total number of modules that form said tread pattern.

More preferably, they represent between 15% and 20% of the total number of modules that form said tread pattern.

Said tread pattern preferably comprises a plurality of pairs of central blocks, each pair of central blocks straddling an equatorial plane of said tyre, and in at least 90% of said modules, a number of studs that is no greater than 2 is provided in said central blocks.

More preferably, in at least 90% of said modules, only one stud is provided in said central blocks.

In this way, wear of the road surface caused by the action of the studs when the studded tyre is used on a road surface that is only partially covered in ice or when there is no ice is minimised, thus observing the regulations that provide an upper limit in respect of the amount of asphalt removed by the studs during rolling on a road surface that is only partially covered in ice or when there is no ice.

In fact, the Applicant has verified that the studs closest to the equatorial plane tend to erode the asphalt to a greater extent compared with the studs closest to the shoulders. At the same time, however, a sufficient number of studs remain in the central tread band region in order to provide optimum performance during traction and turning on icy surfaces.

Even more preferably, only one stud is provided in said central blocks in each module of said tread pattern.

In this way, the central tread band region can have uniform performance along its circumferential extent.

Each module is preferably formed by said first and said second elementary portion.

In another aspect thereof, the present invention relates to a set of tyres according to claim 15.

In one embodiment, said tyre comprises 32 modules and said first fraction is between 65% and 75%.

In one embodiment, said tyre comprises 33 modules and said first fraction is between 40% and 60%.

In one embodiment, said tyre comprises 34 modules and said first fraction is between 35% and 45%.

In one embodiment, said tyre comprises 35 modules and said first fraction is between 35% and 45%.

In one embodiment, said tyre comprises 36 modules and said first fraction is between 30% and 40%.

The features and advantages of the invention will become clearer from the detailed description of a few preferred embodiments thereof, which are illustrated by way of non-limiting example, with reference to the attached drawings, in which:

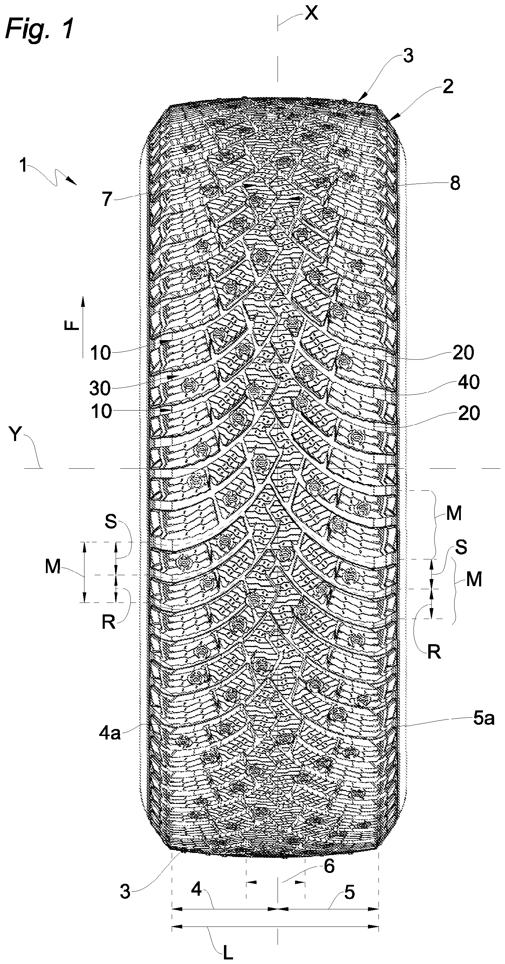

- Fig. 1 is a perspective front view of an example of a studded tyre for vehicle wheels, which is formed in accordance with the present invention;
- Fig. 2 is an enlarged schematic view of a substantial portion of the tread band of the studded tyre of Fig. 1; and
- Fig. 3 is a simplified diagram of a tread band portion, shown by way of example, of the tyre of Fig. 1, which shows the sequence of modules that forms said tread band.

With reference to the attached figures, 1 indicates a studded tyre for vehicle wheels as a whole, which is formed in accordance with the present invention.

The studded tyre 1 comprises a tyre structure that is conventional *per se,* not shown in the attached figures, and a tread band 2, on which a tread surface 3, located in the radially external position of the tread band 2 and intended to make contact with a road surface, is defined.

The tyre 1 has a conventional generically toroidal shape, which extends about an axis of rotation so as to define an axial direction Y on the tread surface 3 that is parallel to said axis of rotation, and which an equatorial plane X crosses that is perpendicular to the axis of rotation and defines a circumferential direction on the tread surface 3 that is parallel to said equatorial plane.

The studded tyre 1 has a nominal section width of approximately 205 mm with a diameter of 16 inches.

An effective width L is identified on the tread band 2, which is defined as the maximum width of the tread band intended to make contact with the ground during standard use conditions, and extends between a first lateral edge 4a and a second lateral edge 5a of the tread band 2, which second lateral edge is axially opposite the first lateral edge 4a.

The tyre 1 is a directional tyre, in which a preferred direction of rotation of the tyre is defined, shown in the figures by the arrow F.

The equatorial plane X divides the tread band 2 into a first region 4, which extends from the equatorial plane X up to the first lateral edge 4a, and a second region 5, which extends from the equatorial plane X up to the second lateral edge 5a.

A central region 6 is also defined on the tread band 2, which straddles the equatorial plane X so as to partially overlap with the first and the second regions 4 and 5.

A plurality of central blocks, which are identified by 7 and 8 and arranged in pairs, are arranged in regular succession along the circumferential extent of the central region 6.

The central blocks 7 and 8 are V-shaped and have concavities that face one another and partially fit into one another.

A plurality of first pairs of main grooves are also defined in the tread band 2, which are formed by a first and a second main groove 10 and 20 and are arranged in regular succession along the circumferential extent of the tread band 2.

Each first main groove 10 extends from the first lateral edge 4a towards the equatorial plane X, while each second main groove 20 extends from the second lateral edge 5a towards the equatorial plane X.

Each first main groove 10 comprises a first axially external segment 11, which extends from the first lateral edge 4a and comprises a curvilinear profile, the inclination of which decreases with respect to the circumferential direction, and an axially internal end segment 12, which extends as a continuation of the first segment 11 until it opens into a second main groove 20 of a pair of successive main grooves.

The end segment 12 of each first main groove 10 has a zigzag configuration that straddles the equatorial plane X.

Each second main groove 20 comprises a first axially external segment 21, which extends from the second lateral edge 5a and has a curvilinear profile, the inclination of which decreases with respect to the circumferential direction, until it opens into the first segment 11 of the first main groove 10.

The second main groove 20 is also axially offset with respect to the first transverse groove 10.

A plurality of second pairs of main grooves are also defined in the tread band 2, which are formed by a third and a fourth main groove 30 and 40 and are arranged in regular succession along the circumferential extent of the tread band 2 in an alternating position with the first pairs of main grooves 10 and 20.

Each third main groove 30 extends from the first lateral edge 4a towards the equatorial plane X up to a blind end that is inside the central block 7, while each fourth main groove 40 extends from the second lateral edge 5a towards the equatorial plane X up to a blind end that is inside the central block 8.

None of the third and fourth main grooves 30, 40 intersects another first, second, third or fourth main groove.

The third and the fourth main grooves 30 and 40 have a similar curvilinear profile that is substantially parallel to the first and the second main grooves 10 and 20.

Furthermore, the third and the fourth main grooves 30 and 40 are substantially symmetrical with respect to the equatorial plane X, even if they are axially offset with respect to one another.

All the first, second, third and fourth main grooves 10, 20, 30 and 40 have a depth of approximately 9 mm and a variable width that decreases from the lateral edges 4a, 5a, where it measures approximately 9-12 mm, towards the equatorial plane X, where it measures approximately 2.5-4 mm.

A plurality of first pairs of secondary grooves are also made in the tread band 2, which are formed by a first and a second secondary groove 50 and 60 and are arranged in regular succession along the circumferential extent of the tread band 2.

Each first secondary groove 50 extends in the first region 4 between two first main grooves 10 that are mutually successive so as to intersect a third main groove 30, while each second secondary groove 60 extends in the second region 5 between two second main grooves 20 that are mutually successive so as to intersect a fourth main groove 40 in a manner substantially specular with respect to the first secondary groove 50 with regard to the equatorial plane X.

The first and the second secondary groove are substantially rectilinear and inclined with respect to the circumferential direction by an angle of approximately 25°, in a discordant manner with respect to the inclination of the first segments 11 and 21 of the first and the second main grooves 10, 20 between which said first and second secondary grooves extend.

A plurality of second pairs of secondary grooves are also made in the tread band 2, which are formed by a third and a fourth secondary groove 70 and 80 and are arranged in regular succession along the circumferential extent of the tread band 2.

Each third secondary groove 70 extends in the first region 4 between two first main grooves 10 that are mutually successive so as to be substantially parallel to a first secondary groove 50, while each fourth secondary groove 80 extends in the second region 5 between two second main grooves 20 that are mutually successive so as to be substantially parallel to a second secondary groove 60.

As well as the central blocks 7 and 8, the grooves described above also define the shoulder blocks 9a and 9b on the tread band 2.

The shoulder blocks 9a are delimited by the first and second pairs of main grooves (10, 30 or 20 and 40) and by the first and second pairs of secondary grooves (50, 70 or 60 and 80), while the shoulder blocks 9b are delimited by the first and second pairs of main grooves (10, 30 or 20 and 40), by the second pairs of secondary grooves (70 or 80) and by the lateral edges of the tread band (4a or 5a).

The blocks and the grooves identified above define, as a whole, the tread pattern of the studded tyre 1.

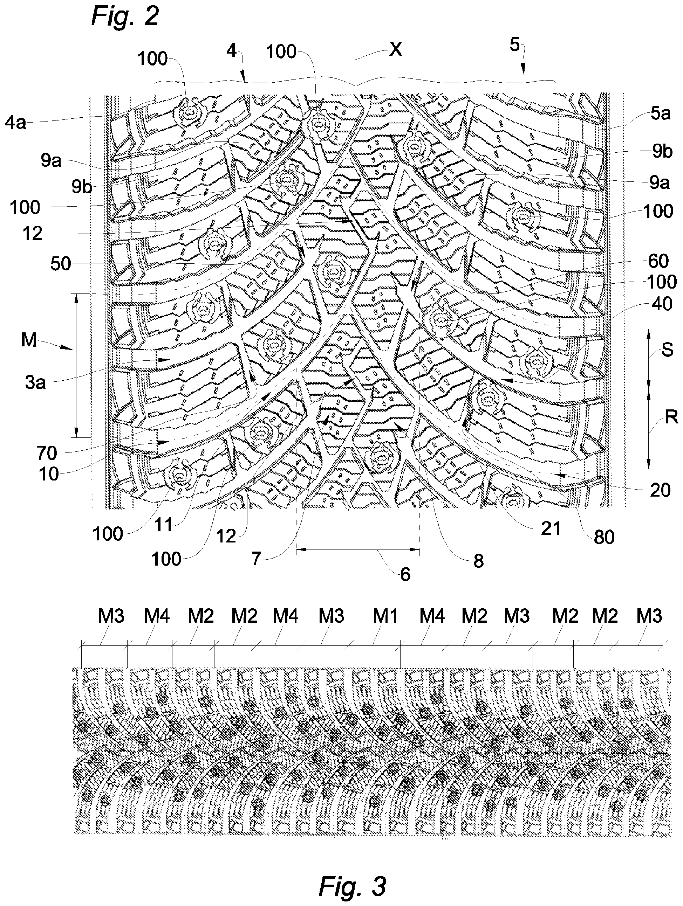

As can be easily identified in Fig. 2, the tread pattern is formed by the continuous repeated sequence of a single module M that is formed by the tread band portion arranged between two successive first pairs of main grooves 10 and 20.

Each module M is in turn formed by a first elementary portion R, which extends from a first pair of main grooves 10 and 20 up to the second pair of main grooves 30 and 40, and by a second elementary portion S, which extends from the second pair of main grooves 30 and 40 up to the first pair of main grooves 10 and 20 successive to said second pair of main grooves.

Each first elementary portion R and each second elementary portion S can have a circumferential dimension that either corresponds to a long pitch or corresponds to a short pitch that is shorter than the long pitch. In particular, the long pitch is approximately 30% greater than the short pitch.

Each module M can be formed by a first and a second elementary portion having a short pitch or a long pitch in various combinations such that modules are provided on the tread pattern in which both the first and the second elementary portion has a long pitch, identified in the following as first modules M1, or modules in which both the first and the second elementary portion has a short pitch, identified in the following as second modules M2, or modules in which the first elementary portion has a short pitch and the second elementary portion has a long pitch, identified in the following as third modules M3, or, lastly, modules in which the first elementary portion has a long pitch and the second elementary portion has a short pitch, identified in the following as fourth modules M4.

Overall, 32 modules are arranged on the tread band 2 according to a semirandom sequence designed to minimise the noise produced by the tread pattern. In particular, 4 first modules M1, 12 second modules M2, 7 third modules M3 and 9 fourth modules M4 are provided on the tread band 2.

A few pairs of adjacent second modules M2 can also be identified inside the sequence of modules.

Sipes are provided in all the central blocks 7, 8 and shoulder blocks 9a and 9b, which sipes support the performance of the tyre on snow-covered surfaces.

In particular, sipes 90 are made in the first and second blocks 7 and 8 and extend substantially in the axial direction Y, sipes 91 are made in the shoulder blocks 9a and extend in a direction that is transverse to the main direction of extension of the blocks 9a (defined by the direction of the first or second main grooves), and sipes 92 are made in the shoulder blocks 9b and extend in a direction that is substantially parallel to the main direction of extension of the blocks 9b (also defined by the direction of the first or second main grooves).

In the manners described below, a plurality of studs 100 are also arranged in the central blocks 7, 8 and the shoulder blocks 9a and 9b.

In particular, a total of 190 studs are arranged on the tread band 2.

The studs 100 are arranged in the blocks of the tread band in circumferential tracks that are defined in the first and in the second regions 4 and 5 in a symmetrical manner and at a predefined spacing from the equatorial plane X.

In particular, 12 circumferential tracks are defined in each first and second region 4 and 5, in which the studs 100 can be arranged, with approximately 2 circumferential tracks passing through the central blocks 7 or 8, 5 circumferential tracks passing through the shoulder blocks 9a, and 5 circumferential tracks passing through the shoulder blocks 9b.

The spacing between one circumferential track and another circumferential track is preferably at least 5 mm, and the spacing between the equatorial plane X of the circumferential track closest thereto is at least 9 mm.

A predefined number of studs equal to 6 is provided in each module, the integer that best approximates the need for a balanced arrangement of 190 studs in 32 modules.

This predefined number of studs is provided in all the third and fourth modules M3 and M4.

However, 7 studs are provided in all the first modules M1, which is one more than the predefined number identified above.

In particular, in each first module M1, three studs 100 are provided in the first region 4 and four studs 100 are provided in the second region 5.

Furthermore, 5 studs are provided in a few second modules M2, which is one less than the predefined number identified above.

In particular, a total of 11 studs are provided in each pair of adjacent second modules M2, rather than 12.

In particular, in one of the two second modules M2 that form this pair, three studs 100 are provided in the first region 4 and two studs 100 are provided in the second region 5. However, in the other second module M2 that forms this pair, all six predefined studs are provided.

Furthermore, in addition to the pairs of adjacent second modules M2, only five studs are provided instead of six at least in an additional second module M2, even if this additional second module M2 is not adjacent to other second modules M2.

However, this additional second module M2 is adjacent to a first or a second elementary portion, which has a short pitch, of a third module M3 or of a fourth module M4.

Furthermore, in this additional second module M2, too, three studs 100 are provided in the first region 4 and two studs 100 are provided in the second region 5.

As a whole, there are 6 second modules M2 in which five studs are provided such that, given that there are in total 4 first modules M1, each having seven studs, the total number of studs fixed to the tread band 2 is equal to 190.

Furthermore, the studs 100 are arranged such that one stud 100 is arranged in the central block 7 or in the central block 8 in each module M.

Furthermore, in each module having an even number of studs, said studs are equally divided between the first region 4 and the second region 5.

Therefore, in this case in which the modules have 5 or 6 or 7 studs, in the modules having six studs, three studs are arranged in the first region 4 and three studs are arranged in the second region 5.

Furthermore, in each module having an even number of studs, the studs arranged in the first region 4 are positioned on circumferential tracks that are at different distances from the equatorial plane X compared to the circumferential tracks in which the studs arranged in the second region 5 are positioned.

In additional embodiments of the present invention that are not shown in the attached figures, the studded tyre has different diameters and, as a result, a different total number of modules.

These examples of studded tyres have substantially the same tread pattern of the tyre, with a few differences in the layout of the studs.

A first difference is given by the different fraction of modules in which a number of studs that is equal to the predefined number is provided, that is six.

In particular, this fraction decreases as the total number of modules that make up the tread band increases, or, in other words, as the diameter of the tyre increases.

According to the following table, Table 1, which also states the parameters relating to the above-described studded tyre 1 that has 32 modules, this fraction decreases.

**Table 1**

| Total no. modules | Total no. studs | Fraction of modules having 6 studs |
|---|---|---|
| 32 | 190 | 0.68 |
| 33 | 192 | 0.51 |
| 34 | 196 | 0.41 |
| 35 | 196 | 0.37 |
| 36 | 202 | 0.33 |

A second difference is given by the decreased number of studs in the pairs of adjacent second modules M2.

In this case, according to Table 2 the fraction of pairs of second modules M2 in which 11 studs are provided (that is one less stud than double the predefined number) with respect to the fraction of pairs of second modules M2 in which 10 studs are provided (that is two studs less than double the predefined number) varies with the total number of modules, which table also lists the parameters relating to the studded tyre 1 described above, which has 32 modules.

**Table 2**

| Total no. modules | Fraction of pairs of second modules having 11 studs | Fraction of pairs of second modules having 10 studs |
|---|---|---|
| 32 | 1.00 | 0 |
| 33 | 0.6 | 0.4 |
| 34 | 0.33 | 0.67 |
| 35 | 0 | 1.00 |
| 36 | 0 | 1.00 |

### EXAMPLE

A studded 205/55 R16 tyre equipped with 190 studs was formed as described above and was subjected to a test in which the number of studs present in the footprint area was counted by continuously changing the footprint area in order to complete the entire circumferential extent of the tread band.

The number of studs determined on the basis of the circumferential extent of the tread band showed an average number of studs in the footprint area equal to 12 and that, for the majority of the tread band, the number of studs varies by no more than just one stud with respect to the average.

In particular, the tests show how, for a fraction that is greater than 90% of the tread band, from 11 to 13 studs are present in the footprint area.

Subsequent tests have also shown how the studded tyre of the invention provides optimum performance in terms of traction (both acceleration and braking) and road holding.

Furthermore, the studded tyre identified above was subjected to a noise emission test by comparing it with studded tyres having the same dimensions, which are produced by the same Applicant, but in which only 130 studs are provided.

In particular, the noise emission test was carried out by mounting the set of tyres to be analysed onto a Volkswagen Golf and measuring the noise inside the vehicle in four positions, two of which substantially correspond to the ears of the driver (respectively indicated as the "Front left" and ""Front right"), and two that substantially correspond to the ears of a passenger positioned in the centre of the rear seats (respectively indicated as the "Rear left" and "Rear right").

The measurements of the noise were taken by scanning the entire frequency spectrum, and subsequently combined to define an average.

Furthermore, the measurements of the noise were taken at two different speeds, at 60 km/h and 80 km/h, respectively, in two different driving conditions, at a constant speed and under coast-down conditions.

The results of the measurements are summarised in Table 3 indicated below, in which each column indicates the combined intensity of the noise (measured in decibels) over the entire frequency spectrum and measured inside the cabin in the positions mentioned above when the tyres according to the invention (INV) were mounted on the car and when the comparison tyres (REF) were mounted.

**Table 3**

| Microphone position | Front left | | Front right | | Rear left | | Rear right | |
|---|---|---|---|---|---|---|---|---|
| tyres | INV | REF | INV | REF | INV | REF | INV | REF |
| Constant speed 60 Km/h | 70.3 | 72.0 | 67.2 | 68.5 | 70.3 | 71.8 | 69.8 | 71.4 |
| Constant speed 80 Km/h | 71.9 | 73.8 | 68.8 | 70.2 | 71.8 | 73.2 | 71.8 | 72.9 |
| Coast down 60 Km/h | 70.2 | 74.0 | 67.2 | 70.4 | 70.3 | 73.6 | 70.2 | 73.1 |
| Coast down 80 Km/h | 72.6 | 73.4 | 69.4 | 70.7 | 72.5 | 73.4 | 72.3 | 73.4 |

The analysis of the results shows how the noise produced by the tyre according to the invention is substantially lower than that recorded for the comparison tyre under every condition tested. This result is particularly surprising when taking into consideration the fact that the studded tyre according to the invention comprises 190 studs compared with the 130 of the comparison tyre, that is to say almost 50% more studs.

## Claims

1. Studded tyre comprising a tread band (2), in which respective pluralities of grooves and blocks are made, which as a whole define a tread pattern of said tyre, wherein:
- a module (M) is identified in said tread pattern, which module extends between opposite axial ends of said tread band and is the minimum tread band portion the configuration of which is successively repeated over the entire circumferential extent of the tread band to form said tread pattern,
- said module is formed by a first and a second elementary portion (R, S) of the tread band, which extend between said axial ends of the tread band and are arranged in the same sequence inside each module,
- each first elementary portion (R) extends in a circumferential direction by an amount that corresponds to a long pitch or by an amount that corresponds to a short pitch and is shorter than said long pitch,
- each second elementary portion (S) extends in a circumferential direction by an amount that corresponds to said long pitch or by an amount that corresponds to said short pitch,
- a number of studs that is equal to a predefined number is provided in at least 30% of said modules,
- at least one first module (M1) formed by a first and a second elementary portion that both have a long pitch, and at least one pair of second modules (M2), each second module (M2) being formed by a first and a second elementary portion that both have a short pitch, are identified between said modules,
- a number of studs that is equal to said predefined number increased by one or two is provided in each first module (M1), and
- a number of studs that is equal to double said predefined number decreased by one or two is provided in each pair of adjacent second modules (M2).

2. Tyre according to claim 1, wherein said predefined number of studs is a number between 4 and 8, preferably an even number and more preferably is 6.

3. Tyre according to any one of the preceding claims, wherein at least one additional second module (M2) is provided in addition to said pairs of adjacent second modules (M2), which additional second module is not adjacent to other second modules, wherein a number of studs is provided that is equal to said predefined number decreased by one or two.

4. Tyre according to claim 3, wherein said additional second module (M2) is adjacent to a module that has just one first or one second elementary portion having a short pitch, said first or second elementary portion that has a short pitch being adjacent to said additional second module.

5. Tyre according to any one of the preceding claims, wherein each module is divided by an equatorial plane (X) of said tyre into a first region (4) and into a second region (5), which extend on opposite sides of said equatorial plane, and in each module in which an even number of studs is provided, said studs are equally distributed between said first region (4) and said second region (5).

6. Tyre according to any one of the preceding claims, wherein, in at least 90% of all of said modules (M), said studs are positioned at different distances from an equatorial plane (X) of said tyre.

7. Tyre according to any one of the preceding claims, wherein each module (M) is divided by an equatorial plane (X) of said tyre into a first region (4) and into a second region (5), which extend on opposite sides of said equatorial plane, and wherein, in each module in which a number of studs is provided that is increased by one with respect to said predefined number, the additional stud is always provided in said first region (4) or always in said second region (5) or wherein in each module in which a number of studs is provided that is decreased by one with respect to said predefined number, the absent stud is always removed from said first region (4) or always from said second region (5).

8. Tyre according to claim 7, wherein said first or second region (4, 5), in which said additional stud is provided in said modules in which a number of studs is provided that is increased by one with respect to said predefined number, is the same region from which said absent stud is removed in said modules in which a number of studs is provided that is decreased by one with respect to said predefined number.

9. Tyre according to any one of the preceding claims, wherein said modules in which a number of studs is provided that is increased by one with respect to said predefined number represent between 5% and 20%, preferably between 10% and 15%, of the total number of modules that form said tread pattern, or wherein said modules in which a number of studs is provided that is decreased by one with respect to said predefined number represent between 10% and 25%, preferably between 15% and 20%, of the total number of modules that form said tread pattern.

10. Tyre according to any one of the preceding claims, wherein said tread pattern comprises a plurality of pairs of central blocks (7, 8), each pair of central blocks straddling an equatorial plane (X) of said tyre, and, in at least 90% of said modules, a number of studs that is no greater than 2 is provided in said central blocks.

11. Tyre according to any one of the preceding claims, wherein said module is formed by the tread band portion arranged between two successive first pairs of main grooves (10, 20), arranged in regular succession along the circumferential extent of the tread band (2), each first pair of main grooves being formed by a first main groove (10), which extends from a first lateral edge (4a) of said tread band towards an equatorial plane (X) of said tread band, and by a second main groove (20) which extends from a second lateral edge (5a) towards said equatorial plane (X).

12. Tyre according to claim 11, wherein a plurality of second pairs of main grooves (30, 40) are arranged in regular succession along the circumferential extent of the tread band (2), each second pair of main grooves being formed by a third main groove (30) and by a fourth main groove (40) in an alternating position with said first pairs of main grooves (10, 20) and wherein each first elementary portion (R) extends from a first pair of main grooves (10, 20) up to a second pair of main grooves (30, 40) and each second elementary portion (S) extends from said second pair of main grooves (30, 40) up to a first pair of main grooves (10, 20) successive to said second pair of main grooves (30, 40).

13. Method for producing a studded tyre, comprising:
- defining a module (M) of a tread pattern of said tyre, said module extending between opposite axial ends of said tread band and being formed by a first and a second elementary portion (R, S) that are positioned one after the other,
- providing a configuration that has a circumferential extension that corresponds to a long pitch and a configuration that has a circumferential extension that corresponds to a short pitch, which is shorter than said long pitch, for each of said first and second elementary portions;
- defining a continuous sequence of said modules, which are variously formed by first and second elementary portions having a long pitch and/or a short pitch, so as to form said tread pattern;
- identifying, among said modules, a first module (M1) formed by a first and a second elementary portion both having a long pitch, and a second module (M2) formed by a first and a second elementary portion both having a short pitch,
- determining a predefined number of studs to be provided in each of said modules;
- providing a number of studs in each first module (M1) that is equal to said predefined number increased by one or two,
- providing a number of studs in each pair of adjacent second modules (M2) that is equal to double said predefined number decreased by one or two,
- forming a tread band (2) of said tyre that is configured according to said tread pattern.

14. Studded tyre comprising a tread band in which respective pluralities of grooves and blocks are formed, which as a whole define a tread pattern of said tyre, wherein:
- a module is identified in said tread pattern, which extends between opposite axial ends of said tread band and is the minimum tread band portion the configuration of which is successively repeated over the entire circumferential extent of said tread band to form said tread pattern,
- each module extends in a circumferential direction by an amount that corresponds to a long pitch or by an amount that corresponds to a short pitch, which is shorter than said long pitch,
- a number of studs that is equal to a predefined number is provided in at least 30% of the modules,
- a number of studs that is equal to double said predefined number increased by one or two is provided in each pair of adjacent modules that have a long pitch,
- a number of studs that is equal to quadruple said predefined number decreased by one or two is provided in each sequence of four adjacent modules having a short pitch.

15. Set of tyres comprising at least three tyres according to either claim 1 or claim 14, having different diameters and a substantially identical tread pattern, wherein each tyre of said set comprises:
- a total number of modules that is different from the other tyres,
- a first fraction of modules in which a number of studs is provided that is equal to said predefined number,
- a second fraction of modules in which a number of studs is provided that is equal to said predefined number increased by one or two, and
- a third fraction of modules in which a number of studs is provided that is equal to said predefined number decreased by one or two,
wherein tyres having a greater total number of modules have a smaller value for said first fraction.

## Patentansprüche

1. Spikereifen, umfassend ein Laufflächenband (2), in dem jeweilige Mehrzahlen von Rillen und Blöcken hergestellt sind, die als ein Ganzes ein Laufflächenmuster des Reifens definieren, wobei:
- ein Modul (M) im Laufflächenmuster identifiziert ist, welches Modul sich zwischen gegenüberliegenden axialen Enden des Laufflächenbandes erstreckt und der kleinste Laufflächenbandabschnitt ist, dessen Konfiguration über die gesamte umfängliche Erstreckung des Laufflächenbandes aufeinanderfolgend wiederholt wird, um das Laufflächenmuster zu bilden,
- das Modul durch einen ersten und einen zweiten elementaren Abschnitt (R, S) des Laufflächenbandes ausgebildet ist, die sich zwischen den axialen Enden des Laufflächenbandes erstrecken und in der gleichen Folge innerhalb jedes Moduls angeordnet sind,
- jeder erste elementare Abschnitt (R) sich in einer Umfangsrichtung um einen Betrag, der einem langen Pitch entspricht, oder um einen Betrag erstreckt, der einem kurzen Pitch entspricht und kürzer als der lange Pitch ist,
- jeder zweite elementare Abschnitt (S) sich in einer Umfangsrichtung um einen Betrag, der dem langen Pitch entspricht, oder um einen Betrag erstreckt, der dem kurzen Pitch entspricht,
- eine Anzahl von Spikes, die gleich einer vordefinierten Anzahl ist, in mindestens 30 % der Module vorgesehen ist,
- mindestens ein erstes Modul (M1), das durch einen ersten und einen zweiten elementaren Abschnitt ausgebildet ist, die beide einen langen Pitch aufweisen, und mindestens ein Paar von zweiten Modulen (M2), wobei jedes zweite Modul (M2) durch einen ersten und einen zweiten elementaren Abschnitt ausgebildet ist, die beide einen kurzen Pitch aufweisen, zwischen den Modulen identifiziert sind,
- eine Anzahl von Spikes, die gleich der vordefinierten Anzahl erhöht um eins oder zwei ist, in jedem ersten Modul (M1) vorgesehen ist, und
- eine Anzahl von Spikes, die gleich dem Zweifachen der vordefinierten Anzahl verringert um eins oder zwei ist, in jedem Paar von benachbarten zweiten Modulen (M2) vorgesehen ist.

2. Reifen nach Anspruch 1, wobei die vordefinierte Anzahl von Spikes eine Anzahl zwischen 4 und 8, vorzugsweise eine gerade Anzahl und insbesondere 6 ist.

3. Reifen nach einem der vorhergehenden Ansprüche, wobei mindestens ein zusätzliches zweites Modul (M2) zusätzlich zu den Paaren von benachbarten zweiten Modulen (M2) vorgesehen ist, welches zusätzliche zweite Modul nicht benachbart zu anderen zweiten Modulen ist, wobei eine Anzahl von Spikes vorgesehen ist, die gleich der vordefinierten Anzahl verringert um eins oder zwei ist.

4. Reifen nach Anspruch 3, wobei das zusätzliche zweite Modul (M2) benachbart zu einem Modul ist, das nur einen ersten oder einen zweiten elementaren Abschnitt mit einem kurzen Pitch aufweist, wobei der erste oder der zweite elementare Abschnitt, der einen kurzen Pitch aufweist, benachbart zum zusätzlichen zweiten Modul ist.

5. Reifen nach einem der vorhergehenden Ansprüche, wobei jedes Modul durch eine Äquatorialebene (X) des Reifens in eine erste Region (4) und in eine zweite Region (5) geteilt ist, die sich auf gegenüberliegenden Seiten der Äquatorialebene erstrecken, und die Spikes in jedem Modul, in dem eine ungerade Anzahl von Spikes vorgesehen ist, gleichmäßig zwischen der ersten Region (4) und der zweiten Region (5) verteilt sind.

6. Reifen nach einem der vorhergehenden Ansprüche, wobei die Spikes in mindestens 90 % aller Module (M) in unterschiedlichen Abständen von einer Äquatorialebene des Reifens positioniert sind.

7. Reifen nach einem der vorhergehenden Ansprüche, wobei jedes Modul (M) durch eine Äquatorialebene (X) des Reifens in eine erste Region (4) und in eine zweite Region (5) geteilt ist, die sich auf gegenüberliegenden Seiten der Äquatorialebene erstrecken, und wobei der zusätzliche Spike in jedem Modul, in dem eine Anzahl von Spikes vorgesehen ist, die in Bezug auf die vordefinierte Anzahl um eins erhöht ist, immer in der ersten Region (4) oder immer in der zweiten Region (5) vorgesehen ist, oder wobei der fehlende Spike in jedem Modul, in dem eine Anzahl von Spikes vorgesehen ist, die in Bezug auf die vordefinierte Anzahl um eins verringert ist, immer aus der ersten Region (4) oder immer aus der zweiten Region (5) entfernt ist.

8. Reifen nach Anspruch 7, wobei die erste oder die zweite Region (4, 5), in der der zusätzliche Spike in den Modulen vorgesehen ist, in denen eine Anzahl von Spikes vorgesehen ist, die in Bezug auf die vordefinierte Anzahl um eins erhöht ist, die gleiche Region ist, aus der der fehlende Spike in den Modulen entfernt ist, in denen eine Anzahl von Spikes vorgesehen ist, die in Bezug auf die vordefinierte Anzahl um eins verringert ist.

9. Reifen nach einem der vorhergehenden Ansprüche, wobei die Module, in denen eine Anzahl von Spikes vorgesehen ist, die in Bezug auf die vordefinierte Anzahl um eins erhöht ist, zwischen 5 % und 20 %, vorzugsweise zwischen 10 % und 15 % der Gesamtanzahl von Modulen darstellen, die das Laufflächenmuster bildet, oder wobei die Module, in denen eine Anzahl von Spikes vorgesehen ist, die in Bezug auf die vordefinierte Anzahl um eins verringert ist, zwischen 10 % und 25 %, vorzugsweise zwischen 15 % und 20 % der Gesamtanzahl von Modulen darstellen, die das Laufflächenmuster bildet.

10. Reifen nach einem der vorhergehenden Ansprüche, wobei das Laufflächenmuster eine Mehrzahl von Paaren von zentralen Blöcken (7, 8) umfasst, wobei jedes Paar von zentralen Blöcken eine Äquatorialebene (X) des Reifens überspannt und in mindestens 90 % der Module eine Anzahl von Spikes, die nicht größer als 2 ist, in den zentralen Blöcken vorgesehen ist.

11. Reifen nach einem der vorhergehenden Ansprüche, wobei das Modul durch einen Laufflächenbandabschnitt ausgebildet ist, der zwischen zwei aufeinanderfolgenden ersten Paaren von Hauptrillen (10, 20) angeordnet ist, die in regelmäßiger Aufeinanderfolge entlang der umfänglichen Erstreckung des Laufflächenbandes (2) angeordnet sind, wobei jedes Paar von Hauptrillen durch eine erste Hauptrille (10), die sich von einer ersten Seitenkante (4a) des Laufflächenbandes zu einer Äquatorialebene (X) des Laufflächenbandes erstreckt, und eine zweite Hauptrille (20) ausgebildet ist, die sich von einer zweiten Seitenkante (5a) zur Äquatorialebene (X) erstreckt.

12. Reifen nach Anspruch 11, wobei eine Mehrzahl von zweiten Paaren von Hauptrillen (30, 40) in regelmäßiger Aufeinanderfolge entlang der umfänglichen Erstreckung des Laufflächenbandes (2) angeordnet ist, wobei jedes Paar von Hauptrillen durch eine dritte Hauptrille (30) und durch eine vierte Hauptrille (40) in einer abwechselnden Position mit den ersten Paaren von Hauptrillen (10, 20) ausgebildet ist, und wobei jeder erste elementare Abschnitt (R) sich von einem ersten Paar von Hauptrillen (10, 20) bis zu einem zweiten Paar von Hauptrillen (30, 40) erstreckt, und jeder zweite elementare Abschnitt (S) sich vom zweiten Paar von Hauptrillen (30, 40) bis zu einem ersten Paar von Hauptrillen (10, 20) erstreckt, das auf das zweite Paar von Hauptrillen (30, 40) folgt.

13. Verfahren zur Herstellung eines Spikereifens, umfassend:
- Definieren eines Moduls (M) eines Laufflächenmusters des Reifens, wobei das Modul sich zwischen gegenüberliegenden axialen Enden des Laufflächenbandes erstreckt und durch einen ersten und einen zweiten elementaren Abschnitt (R, S) ausgebildet ist, die einer nach dem anderen angeordnet sind,
- Bereitstellen einer Konfiguration, die eine umfängliche Erstreckung aufweist, die einem langen Pitch entspricht, und einer Konfiguration, die eine umfängliche Erstreckung aufweist, die einem kurzen Pitch entspricht, der kürzer als der lange Pitch ist, für jeden der ersten und der zweiten elementaren Abschnitte;
- Definieren einer kontinuierlichen Folge der Module, die durch die ersten und die zweiten elementaren Abschnitte mit einem langen und/oder einem kurzen Pitch unterschiedlich ausgebildet sind, um das Laufflächenmuster zu bilden;
- Identifizieren mindestens eines ersten Moduls (M1), das durch einen ersten und einen zweiten elementaren Abschnitt ausgebildet ist, die beide einen langen Pitch aufweisen, und eines zweiten Moduls (M2), das durch einen ersten und einen zweiten elementaren Abschnitt ausgebildet ist, die beide einen kurzen Pitch aufweisen, unter den Modulen,
- Bestimmen einer vordefinierten Anzahl von Spikes, die für jedes der Module bereitgestellt werden soll;
- Bereitstellen einer Anzahl von Spikes in jedem ersten Modul (M1), die gleich der vordefinierten Anzahl erhöht um eins oder zwei ist,
- Bereitstellen einer Anzahl von Spikes in jedem Paar von benachbarten zweiten Modulen (M2), die gleich dem Zweifachen der vordefinierten Anzahl verringert um eins oder zwei ist,
- Bilden eines Laufflächenbandes (2) des Reifens, der gemäß dem Laufflächenmuster konfiguriert ist.

14. Spikereifen, umfassend ein Laufflächenband in dem jeweilige Mehrzahlen von Rillen und Blöcken ausgebildet sind, die als ein Ganzes ein Laufflächenmuster des Reifens definieren, wobei:
- ein Modul im Laufflächenmuster identifiziert ist, das sich zwischen gegenüberliegenden axialen Enden des Laufflächenbandes erstreckt und der kleinste Laufflächenbandabschnitt ist, dessen Konfiguration über die gesamte umfängliche Erstreckung des Laufflächenbandes aufeinanderfolgend wiederholt wird, um das Laufflächenmuster zu bilden,
- jedes Modul sich in einer Umfangsrichtung um einen Betrag, der einem langen Pitch entspricht, oder um einen Betrag erstreckt, der einem kurzen Pitch entspricht, der kürzer als der lange Pitch ist,
- eine Anzahl von Spikes, die gleich einer vordefinierten Anzahl ist, in mindestens 30 % der Module vorgesehen ist,
- eine Anzahl von Spikes, die gleich dem Zweifachen der vordefinierten Anzahl erhöht um eins oder zwei ist, in jedem Paar von benachbarten Modulen mit einem langen Pitch vorgesehen ist,
- eine Anzahl von Spikes, die gleich dem Vierfachen der vordefinierten Anzahl verringert um eins oder zwei ist, in jeder Folge von vier benachbarten Modulen mit einem kurzen Pitch vorgesehen ist.

15. Satz von Reifen, umfassend mindestens drei Reifen nach Anspruch 1 oder 14 mit unterschiedlichen Durchmessern und einem im Wesentlichen identischen Laufflächenmuster, wobei jeder Reifen des Satzes umfasst:
- eine Gesamtanzahl von Modulen, die sich von den anderen Reifen unterscheidet,
- einen ersten Teil von Modulen, in dem eine Anzahl von Spikes vorgesehen ist, die gleich der vordefinierten Anzahl ist,
- einen zweiten Teil von Modulen, in dem eine Anzahl von Spikes vorgesehen ist, die gleich der vordefinierten Anzahl erhöht um eins oder zwei ist,
- einen dritten Teil von Modulen, in dem eine Anzahl von Spikes vorgesehen ist, die gleich der vordefinierten Anzahl verringert um eins oder zwei ist, wobei Reifen mit einer größeren Gesamtanzahl von Modulen einen kleineren Wert für den ersten Teil aufweisen.

## Revendications

1. Pneu à crampons comprenant une bande de roulement (2), dans laquelle sont réalisées des pluralités respectives de rainures et de pavés, qui définissent dans leur ensemble une sculpture dudit pneu, dans lequel :
- un module (M) est identifié dans ladite sculpture, lequel module s'étend entre des extrémités axiales opposées de ladite bande de roulement et représente la partie de bande de roulement minimale dont la configuration est successivement répétée sur toute l'étendue circonférentielle de la bande de roulement pour former ladite sculpture,
- ledit module est formé par des première et deuxième parties élémentaires (R, S) de la bande de roulement, qui s'étendent entre lesdites extrémités axiales de la bande de roulement et qui sont agencées dans la même séquence dans chaque module,
- chaque première partie élémentaire (R) s'étend dans une direction circonférentielle d'une quantité correspondant à un pas long ou d'une quantité correspondant à un pas court qui est inférieur audit pas long,
- chaque deuxième partie élémentaire (S) s'étend dans une direction circonférentielle d'une quantité correspondant audit pas long ou d'une quantité correspondant audit pas court,
- un nombre de crampons qui est égal à un nombre prédéfini est prévu dans au moins 30% desdits modules,
- au moins un premier module (M1) formé par des première et deuxième parties élémentaires qui ont toutes deux un pas long, et au moins une paire de deuxièmes modules (M2), chaque deuxième module (M2) étant formé par des première et deuxième parties élémentaires qui ont toutes deux un pas court, sont identifiés entre lesdits modules,
- un nombre de crampons qui est égal audit nombre prédéfini augmenté de un ou deux est prévu dans chaque premier module (M1), et
- un nombre de crampons qui est égal au double dudit nombre prédéfini diminué de un ou deux est prévu dans chaque paire de deuxièmes modules adjacents (M2).

2. Pneu selon la revendication 1, dans lequel ledit nombre prédéfini de crampons est un nombre compris entre 4 et 8, de préférence un nombre pair et plus préférablement est égal à 6.

3. Pneu selon l'une quelconque des revendications précédentes, dans lequel au moins un deuxième module supplémentaire (M2) est prévu en plus desdites paires de deuxièmes modules adjacents (M2), lequel deuxième module supplémentaire n'est pas adjacent à d'autres deuxièmes modules, dans lequel est prévu un nombre de crampons qui est égal audit nombre prédéfini diminué de un ou deux.

4. Pneu selon la revendication 3, dans lequel ledit deuxième module supplémentaire (M2) est adjacent à un module qui n'a qu'une première ou une deuxième partie élémentaire ayant un pas court, ladite première ou deuxième partie élémentaire qui a un pas court étant adjacente audit deuxième module supplémentaire.

5. Pneu selon l'une quelconque des revendications précédentes, dans lequel chaque module est divisé par un plan équatorial (X) dudit pneu en une première région (4) et en une deuxième région (5), qui s'étendent sur des côtés opposés dudit plan équatorial, et dans chaque module dans lequel un nombre pair de crampons est prévu, lesdits crampons sont également répartis entre ladite première région (4) et ladite deuxième région (5).

6. Pneu selon l'une quelconque des revendications précédentes, dans lequel, dans au moins 90% de l'ensemble desdits modules (M), lesdits crampons sont positionnés à des distances différentes d'un plan équatorial (X) dudit pneu.

7. Pneu selon l'une quelconque des revendications précédentes, dans lequel chaque module (M) est divisé par un plan équatorial (X) dudit pneu en une première région (4) et en une deuxième région (5), qui s'étendent sur des côtés opposés dudit plan équatorial, et dans lequel, dans chaque module dans lequel est prévu un nombre de crampons qui est augmenté de un par rapport audit nombre prédéfini, le crampon supplémentaire est toujours prévu dans ladite première région (4) ou toujours dans ladite deuxième région (5) ou dans lequel dans chaque module dans lequel est prévu un nombre de crampons qui est diminué de un par rapport audit nombre prédéfini, le crampon absent est toujours retiré de ladite première région (4) ou toujours de ladite deuxième région (5).

8. Pneu selon la revendication 7, dans lequel ladite première ou deuxième région (4, 5), dans laquelle ledit crampon supplémentaire est prévu dans lesdits modules dans lesquels est prévu un nombre de crampons qui est augmenté de un par rapport audit nombre prédéfini, est la même région de laquelle ledit crampon absent est retiré dans lesdits modules dans lesquels est prévu un nombre de crampons qui est diminué de un par rapport audit nombre prédéfini.

9. Pneu selon l'une quelconque des revendications précédentes, dans lequel lesdits modules dans lesquels est prévu un nombre de crampons qui est augmenté de un par rapport audit nombre prédéfini représentent entre 5% et 20%, de préférence entre 10% et 15%, du nombre total de modules qui forment ladite sculpture, ou dans lequel lesdits modules dans lesquels est prévu un nombre de crampons qui est diminué de un par rapport audit nombre prédéfini représentent entre 10% et 25%, de préférence entre 15% et 20%, du nombre total de modules qui forment ladite sculpture.

10. Pneu selon l'une quelconque des revendications précédentes, dans lequel ladite sculpture comprend une pluralité de paires de pavés centraux (7, 8), chaque paire de pavés centraux chevauchant un plan équatorial (X) dudit pneu, et, dans au moins 90% desdits modules, un nombre de crampons qui n'est pas supérieur à 2 est prévu dans lesdits pavés centraux.

11. Pneu selon l'une quelconque des revendications précédentes, dans lequel ledit module est formé par la partie de bande de roulement agencée entre deux premières paires successives de rainures principales (10, 20), agencées en succession régulière le long de l'étendue circonférentielle de la bande de roulement (2), chaque première paire de rainures principales étant formée par une première rainure principale (10), qui s'étend d'un premier bord latéral (4a) de ladite bande de roulement vers un plan équatorial (X) de ladite bande de roulement, et par une deuxième rainure principale (20) qui s'étend d'un deuxième bord latéral (5a) vers ledit plan équatorial (X).

12. Pneu selon la revendication 11, dans lequel une pluralité de deuxièmes paires de rainures principales (30, 40) sont agencées en succession régulière le long de l'étendue circonférentielle de la bande de roulement (2), chaque deuxième paire de rainures principales étant formée par une troisième rainure principale (30) et par une quatrième rainure principale (40) en position alternée avec lesdites premières paires de rainures principales (10, 20) et dans lequel chaque première partie élémentaire (R) s'étend d'une première paire de rainures principales (10, 20) jusqu'à une deuxième paire de rainures principales (30, 40) et chaque deuxième partie élémentaire (S) s'étend de ladite deuxième paire de rainures principales (30, 40) jusqu'à une première paire de rainures principales (10, 20) successive à ladite deuxième paire de rainures principales (30, 40).

13. Procédé de production d'un pneu à crampons, comprenant :
- la définition d'un module (M) d'une sculpture dudit pneu, ledit module s'étendant entre des extrémités axiales opposées de ladite bande de roulement et étant formé par des première et deuxième parties élémentaires (R, S) qui sont positionnées l'une après l'autre,
- la fourniture d'une configuration qui a une extension circonférentielle correspondant à un pas long et d'une configuration qui a une extension circonférentielle correspondant à un pas court, qui est inférieur audit pas long, pour chacune desdites première et deuxième parties élémentaires ;
- la définition d'une séquence continue desdits modules, qui sont formés de diverses manières par des première et deuxième parties élémentaires ayant un pas long et/ou un pas court, de manière à former ladite sculpture ;
- l'identification, parmi lesdits modules, d'un premier module (M1) formé par des première et deuxième parties élémentaires ayant toutes deux un pas long, et d'un deuxième module (M2) formé par des première et deuxième parties élémentaires ayant toutes deux un pas court,
- la détermination d'un nombre prédéfini de crampons à fournir dans chacun desdits modules;
- la fourniture d'un nombre de crampons dans chaque premier module (M1) qui est égal audit nombre prédéfini augmenté de un ou deux,
- la fourniture d'un nombre de crampons dans chaque paire de deuxièmes modules adjacents (M2) qui est égal au double dudit nombre prédéfini diminué de un ou deux,
- la formation d'une bande de roulement (2) dudit pneu qui est configurée selon ladite sculpture.

14. Pneu à crampons comprenant une bande de roulement dans laquelle sont formées des pluralités respectives de rainures et de pavés, qui définissent dans leur ensemble une sculpture dudit pneu, dans lequel :
- un module est identifié dans ladite sculpture, qui s'étend entre des extrémités axiales opposées de ladite bande de roulement et représente la partie de bande de roulement minimale dont la configuration est successivement répétée sur toute l'étendue circonférentielle de ladite bande de roulement pour former ladite sculpture,
- chaque module s'étend dans une direction circonférentielle d'une quantité correspondant à un pas long ou d'une quantité correspondant à un pas court, qui est inférieur audit pas long,
- un nombre de crampons qui est égal à un nombre prédéfini est prévu dans au moins 30% des modules,
- un nombre de crampons qui est égal au double dudit nombre prédéfini augmenté de un ou deux est prévu dans chaque paire de modules adjacents qui ont un pas long,
- un nombre de crampons qui est égal à quatre fois ledit nombre prédéfini diminué de un ou deux est prévu dans chaque séquence de quatre modules adjacents ayant un pas court.

15. Ensemble de pneus comprenant au moins trois pneus selon l'une des revendications 1 et 14, ayant des diamètres différents et une sculpture sensiblement identique, dans lequel chaque pneu dudit ensemble comprend :
- un nombre total de modules qui est différent des autres pneus,
- une première fraction de modules dans laquelle est prévu un nombre de crampons qui est égal audit nombre prédéfini,
- une deuxième fraction de modules dans laquelle est prévu un nombre de crampons qui est égal audit nombre prédéfini augmenté de un ou deux, et
- une troisième fraction de modules dans laquelle est prévu un nombre de crampons qui est égal audit nombre prédéfini diminué de un ou deux, dans lequel les pneus ayant un nombre total supérieur de modules ont une valeur inférieure pour ladite première fraction.
